# EUROPEAN PATENT APPLICATION

(11) **EP 2 838 183 A1**
(43) Date of publication of application: **18.02.2015**
(21) Application number: 14766091.4
(22) Date of filing: 16.05.2014
(51) Int. Cl.: H02K 7/20

(54) **BIDIRECTIONAL POWER CONVERSION DEVICE**

(30) Priority: 12.06.2013 KR 20130066948; 01.07.2013 KR 20130076534
(71) Applicant: LG Chem. Ltd., Youngdungpo-gu Seoul 150-721 (KR)
(72) Inventor: BAEK, Seoung Mun, Daejeon 305-738 (KR); KANG, Jung Soo, Daejeon 305-738 (KR); CHO, Young Bo, Daejeon 305-738 (KR)
(74) Representative: Hoffmann Eitle
(86) International application number: PCT/KR2014/004398
(87) International publication number: WO 2014/200193

(57) **Abstract**

The present invention relates to a bidirectional power converting apparatus, and more particularly, to a bidirectional power converting apparatus that generates AC power or DC power insulated from each other by physically connecting a plurality of ACDC motor generators to charge a battery.

## Description

### [Technical Field]

This application claims priority to and the benefit of Korean Patent Application No. 10-2013-0066948 filed in the Korean Intellectual Property Office on June 12, 2013, and Korean Patent Application No. 10-2013-0076534 filed in the Korean Intellectual Property Office on July 01, 2013, the entire contents of which are incorporated herein by reference.

The present invention relates to a bidirectional power converting apparatus, and to a bidirectional power converting apparatus that may charge a battery by converting an AC power supply into a DC power supply or charge a battery by converting the DC power supply into the AC power supply, by using a plurality of ACDC motor generators which can be rotated and generate electricity by receiving the AC power supply and the DC power supply.

More particularly, the present invention relates to a bidirectional power converting apparatus that can physically connect a plurality of ACDC motor generators which may receive an AC power supply and a DC power supply and rotate another ACDC motor generator by using rotation force of one ACDC motor generator to thereby charge a battery by converting the AC power supply into an insulated DC power supply or charge the battery by converting the DC power supply into an insulated AC power supply.

### [Background Art]

Recently, with the rapid development of industry and economy a use amount of electricity that may enable the development has been increased together.

Meanwhile, the electricity exists in a direct current state called a direct current (DC) and an alternating current state called an alternating current (AC), and an electronic device variously uses the DC current and the AC current. Generally, the electricity transmitted from power plants corresponds to the AC current in the AC state, and the AC current is converted through a converter so as to be used by the electronic device driven by the DC current.

The converter includes various types such as an AC-AC converter, an AC-DC converter, a DC-DC converter, and a DC-AC converter, and in an existing converter, Korean Patent Application Publication No. 10-2013-0050180 relates to a DC-DC converter and has an advantage of reducing a conduction loss by generating a rectifier circuit by using a magnetic auxiliary wire.

However, most of the converters in the related art in addition to the aforementioned DC-DC converter use a method of converting the AC to the DC or the DC to the AC by using a magnetic induced current.

In the method, while an AC current side (hereinafter, a first side) and a DC current side (hereinafter, a second side) are insulated from each other, it is inconvenient to insulate the first side and the second side from each other by using a separate insulating element (for example, an integrated circuit (IC) using a semiconductor, and the like), and as a result, in the converter in the related art, there is a problem in that the size of the converter is increased enough to receive the insulating element.

Accordingly, in order to solve the problem of the aforementioned existing converter, the inventors invent a bidirectional power converting apparatus that may charge a battery by insulating the first side and the second side without using a circuit insulating element and bidirectionally converting an AC power supply into a DC power supply or the DC power supply into the AC power supply by receiving at least one of the AC power supply and the DC power supply, and further decrease the entire size of the power converting apparatus.

### [Detailed Description of the Invention]

### [Technical Problem]

In order to solve the aforementioned problems in the related art, an object of the present invention is to provide a bidirectional power converting apparatus that may charge a battery by converting an AC power supply into a DC power supply or charge a battery by converting the DC power supply into the AC power supply, by using a plurality of ACDC motor generators which can be rotated and generate electricity by receiving the AC power supply and the DC power supply.

In more detail, the present invention provides a bidirectional power converting apparatus that can insulate an AC power supply side and a DC power supply side from each other without a separate insulation element.

Further, the present invention provides a bidirectional power converting apparatus in which an insulating process can be omitted by physically directly connecting a plurality of ACDC motor generators which receives the AC power supply or the DC power supply.

Further, the present invention provides a bidirectional power converting apparatus that can control a power ratio by controlling a gear ratio of the plurality of ACDC motor generators.

Further, the present invention provides a bidirectional power converting apparatus in which the AC power supply and the DC power supply can be differently provided according to a power supply specification of the applied AC power supply or DC power supply

### [Technical Solution]

An exemplary embodiment of the present invention provides a bidirectional power converting apparatus including a plurality of ACDC motor generators that receives an AC power supply to generate DC power or receives a DC power supply to generate AC power.

The plurality of ACDC motor generators may be connected with each other through a rotation shaft.

The plurality of ACDC motor generators may be provided according to a power supply specification of each applied AC power supply or DC power supply.

The power supply specification may correspond to at least one of a voltage, an ampere, a frequency, and power consumption.

The plurality of ACDC motor generators may provide rotation force for rotating the rotation shaft.

The plurality of ACDC motor generators may be fastened with each other through the rotation shaft and at least one gear, respectively.

In each of the plurality of ACDC motor generators, a power supply ratio may be controlled through a gear ratio of each of one or more gears.

The plurality of ACDC motor generators may engage with each other to be fastened with each other through at least one gear, respectively.

In each of the plurality of ACDC motor generators, power supply ratios may be controlled through gear ratios of one or more gears engaging with each other.

The plurality of ACDC motor generators may generate AC power or DC power insulated through each rotation force.

The plurality of ACDC motor generators may be provided according to a power supply specification of each generated AC power or DC power.

The plurality of ACDC motor generators may be connected with each other through one or more belts and rotate so as to respond to each other.

The plurality of ACDC motor generators may be insulated from each other.

### [Advantageous Effects]

In the bidirectional power converting apparatus according to the exemplary embodiment of the present invention, there is an advantage in that the AC power supply side and the DC power supply side are connected through a physical means to be insulated from each other even without a separate insulating element.

As a result, there is an advantage in that since the entire size is reduced by a space occupied by the insulating element, the present invention has an advantage of downsizing the power converting apparatus.

Further, there is an advantage in that since gear ratios of the gears connecting the plurality of ACDC motor generators may be controlled, a power supply ratio corresponding to the gear ratio may be controlled together.

Further, there is an advantage in that since the AC power supply side and the DC power supply side are simplified in a circuit, a design of the circuit may be facilitated.

### [Brief Description of Drawings]

FIG. 1 is a diagram illustrating a circuit included in an existing converter 10.
FIG. 2 is a diagram illustrating a configuration of a bidirectional power converting apparatus 100 according to an exemplary embodiment of the present invention.
FIG. 3 is a diagram illustrating a state in which a first ACDC motor generator 110 and a second ACDC motor generator 120 are connected with each other through a rotation shaft 130.
FIG. 4 is a diagram illustrating a state in which the first ACDC motor generator 110 and the second ACDC motor generator 120 are directly connected with each other through each gear.
FIG. 5 is a diagram illustrating a state in which the first ACDC motor generator 110 and the second ACDC motor generator 120 are connected with each other through a belt 140.

### [Best Mode]

The present invention will be described below in detail with reference to the accompanying drawings. Here, the repetitive description and the detailed description of known functions and configurations which can unnecessarily obscure the gist of the present invention will be omitted. Embodiments of the present invention are provided in order to more completely describe the present invention to those skilled in the art. Accordingly, in the drawings, shapes, sizes, etc., of the elements are exaggerated for more clear explanation.

Throughout this specification, unless explicitly described to the contrary, the word "comprise" and variations such as "comprises" or "comprising", will be understood to imply the inclusion of stated elements but not the exclusion of any other elements.

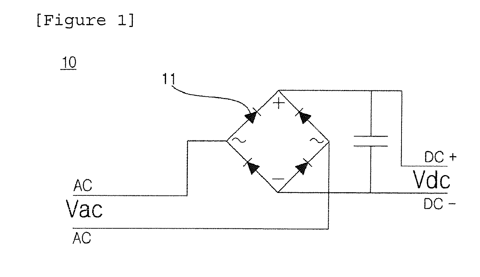

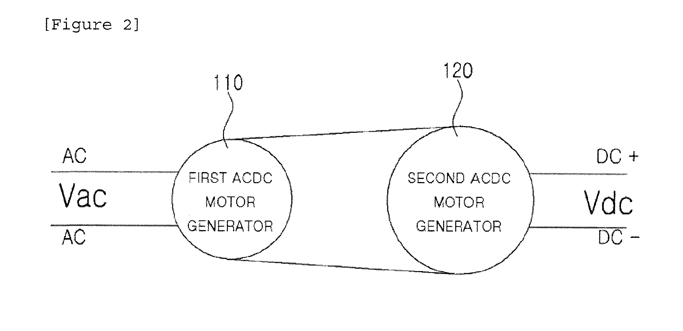

FIG. 1 is a diagram illustrating a circuit included in an existing converter 10, and FIG. 2 is a diagram illustrating a configuration of a bidirectional power converting apparatus 100 according to an exemplary embodiment of the present invention.

First, when describing the existing converter 10 through FIG. 1, in the existing converter 10, an AC power supply side and a DC power supply side are insulated from each other through a separate insulating element 11.

The insulating element 11 may mean that a periphery of a conductive portion is coated or insulated by using a nonconductor (for example, rubber and the like) when an electronic device or an electric wire is generally charged with electricity, and the insulating element 11 may be made of a material in which degradation does not occur while being exposed at a high temperature or a low temperature.

In FIG. 1, a diode is illustrated as the insulating element 11, and the diode insulates an AC power supply side (a primary side) and a DC power supply side (a secondary side) by using an insulation area formed when the number of free electrons and holes is decreased in a small space at a bonding portion generated by bonding a p-type semiconductor and an n-type semiconductor.

Since an insulating process using the diode uses a known technique in the related art, a detailed description is omitted, and the existing converter 10 needs to provide an internal space for receiving the insulating element 11, and as a result, there is a problem in that an entire size is increased.

When describing the bidirectional power converting apparatus 100 in which such a problem is improved with reference to FIG. 2, the bidirectional power converting apparatus 100 includes a first ACDC motor generator 110 and a second ACDC motor generator 120.

First, the first ACDC motor generator 110 rotates by receiving AC power from the AC power supply to serve to rotate a shaft of the second ACDC motor generator 120 to be described below, and in this case, insulated DC power is generated by the rotated second ACDC motor generator 120, and the generated DC power is supplied to a battery (not illustrated) to charge the battery.

Further, in this specification, it is illustrated that the first ACDC motor generator 110 receives the AC power from the AC power supply, but it is cautious that the first ACDC motor generator 110 receives the DC power from the DC power supply in addition to the AC power supply to be rotatable, and the power which may be applied to the first ACDC motor generator 110 may correspond to both the AC and the DC.

Further, while the first ACDC motor generator 110 rotates according to the rotation of the second ACDC motor generator 120 to be described below, the insulated AC power may be generated, and the generated AC power may be supplied to the battery (not illustrated) to charge the battery.

The first ACDC motor generator 110 that performs the role may be basically configured by an external stator and an internal rotator. The internal rotator of the first ACDC motor generator 110 receiving the AC power from the outside rotates by an induced current, and a first gear 111 may be formed at an end of the internal rotator.

The first gear 111 is fixed without a separation from the internal rotator of the first ACDC motor generator 110, rotates to correspond with the internal rotator, and directly engages with a second gear 121 of the second ACDC motor generator 120 to be described below to rotate the second ACDC motor generator 120, or directly engages with a rotation shaft gear 131 formed at the rotation shaft 130 to be described below to rotate the rotation shaft 130.

The first ACDC motor generator 110 rotates the internal rotator through torque generated by the induced current, and a small motor may be formed by winding a wire which is disconnected around the internal rotator many times, or a large motor may be formed by winding the wire which is not disconnected around the internal rotator many times.

The first ACDC motor generator 110 may be classified into an induction motor, a synchronous motor, a commutator motor, and the like according to a type of rotator, and if the first ACDC motor generator 110 performs the aforementioned role, it is cautious that a kind and a size of the first ACDC motor generator 110 are not limited.

In an embodiment, the first ACDC motor generator 110 may be provided according to a power supply specification of the applied AC power. In other words, the first ACDC motor generator 110 may be selected according to the power supply specification of the applied AC power and provided at the inside of the bidirectional power converting apparatus 100.

Here, the power supply specification may mean a specification including a voltage, an ampere, a frequency, power consumption, and the like, and when a voltage of the AC power is lower than a consumed voltage of the first ACDC motor generator 110, the first ACDC motor generator 110 may not be properly operated, and as a result, the first ACDC motor generator 110 may be selectively changed according to a power supply specification of the AC power supply. Accordingly, even though the AC power is variously applied, the first ACDC motor generator 110 may be selected so as to correspond to the power supply specification by a user.

For example, when the applied voltage of the AC power supply is 110 V, the first ACDC motor generator 110 may be changed for 110 V, and when the applied voltage is 220 V, the first ACDC motor generator 110 may be changed for 220 V.

Meanwhile, the first ACDC motor generator 110 is not limited to 110 V and 220 V, and the first ACDC motor generator 110 may be changed anytime according to various voltage values.

Next, while the second ACDC motor generator 120 serves to generate the insulated DC power by rotating to correspond to the first ACDC motor generator 110 described above, and the generated DC power may be supplied to the battery (not illustrated) to charge the battery.

On the contrary, the second ACDC motor generator 120 rotates by receiving DC power from the DC power supply to rotate a shaft of the first ACDC motor generator 110 described above, and in this case, insulated AC power is generated by the rotated first ACDC motor generator 110, and the generated AC power is supplied to a battery (not illustrated) to charge the battery.

Further, in this specification, it is illustrated that the second ACDC motor generator 120 receives the DC power, but like the first ACDC motor generator 110, it is cautious that the second ACDC motor generator 120 receives the AC power from the AC power supply in addition to the DC power supply to be rotatable, and the power which may be applied to the second ACDC motor generator 120 may correspond to both the AC and the DC. The second ACDC motor generator 120 performing the role may be internally configured by an external stator and an internal rotator like the first ACDC motor generator 110, and a second gear 121 engaging with the aforementioned first gear 111 may be formed at an end of the internal rotator.

While the second gear 121 formed at the end of the internal rotator rotates by engaging with the aforementioned first gear 111, the internal rotator rapidly rotates. In this case, in the rotation of the internal rotator, a magnetic flux is disconnected by a coil (a conductor wound with the wire) provided at the inside of the second ACDC motor generator 120, and in this case, generated electromotive force is discharged to the outside, and the electromotive force may correspond to the DC power.

The second gear 121 formed at the end of the internal rotator may directly engage with the first gear 111 or directly engage with the rotation shaft gear 131 to be described below.

In addition, the second ACDC motor generator 120 may be provided according to a power supply specification of the generated DC power, like the aforementioned first ACDC motor generator 110. In other words, the second ACDC motor generator 120 may be selected according to the power supply specification of the generated DC power and provided at the inside of the bidirectional power converting apparatus 100. Accordingly, even though the DC power is varied, the second ACDC motor generator 120 may be selected so as to correspond to the power supply specification by the user.

Here, since the power supply specification is the same as described in the first ACDC motor generator 110, the description thereof is omitted.

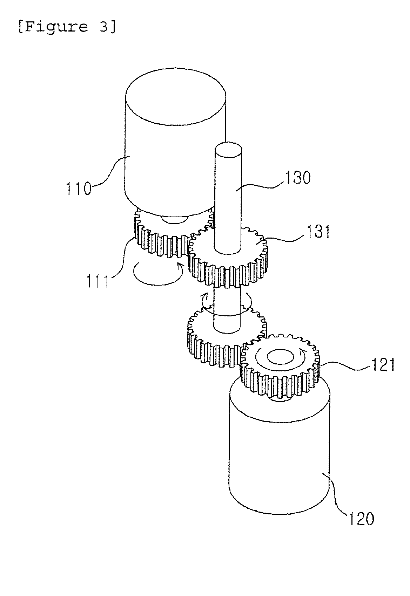

Meanwhile, the second ACDC motor generator 120 may be connected with the aforementioned first ACDC motor generator 110 in various methods (physical methods), and this will be described in more detail with reference to FIG. 3.

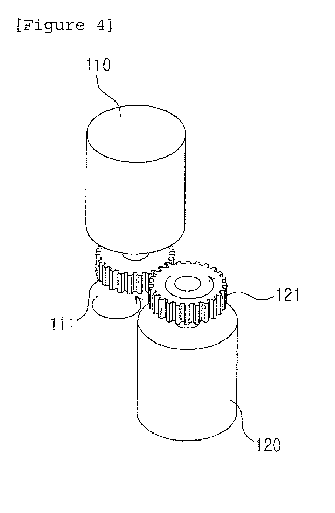

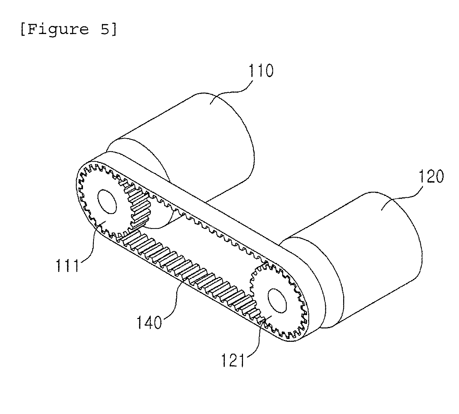

FIG. 3 is a diagram illustrating a state in which a first ACDC motor generator 110 and a second ACDC motor generator 120 are connected with each other through a rotation shaft 130, FIG. 4 is a diagram illustrating a state in which the first ACDC motor generator 110 and the second ACDC motor generator 120 are directly connected with each other through each gear, and FIG. 5 is a diagram illustrating a state in which the first ACDC motor generator 110 and the second ACDC motor generator 120 are connected through a belt 140.

First, referring to FIG. 3, the first ACDC motor generator 110 and the second ACDC motor generator 120 may be connected with each other through the rotation shaft 130 at the center, and one or more rotation shaft gears 131 engaging with the first gear 111 and the second gear 121 may be provided at the rotation shaft 130.

According to the connection state, in the case where the first ACDC motor generator 110 receives the AC power supply to rotate in a clockwise or counterclockwise direction, while the rotation shaft gear 131 engaging with the first gear 111 is rotated, the rotation shaft 130 is rotated and another rotation shaft gear 131 formed at one side of the rotation shaft 130 is rotated, and while the second gear 121 engaging with the rotation shaft gear 131 is rotated, the second ACDC motor generator 120 is driven.

Since the configuration of the bidirectional power converting apparatus 100 does not require a separate insulating element, only when the rotation shaft 130 is connected to the center, sizes of the AC power supply side and the DC power supply side may be reduced. In addition, since physical rotation force of the first ACDC motor generator 110 is transferred to the second ACDC motor generator 120, or physical rotation force of the second ACDC motor generator 120 is transferred to the first ACDC motor generator 110 as it is without loss, it may be excellent even in energy efficiency.

Next, referring to FIG. 4, the first ACDC motor generator 110 and the second ACDC motor generator 120 may directly engage with each other through the first gear 111 and the second gear 121 to be connected with each other, respectively. The configuration may be used in the case where a distance between the first ACDC motor generator 110 and the second ACDC motor generator 120 is closer or the size of the bidirectional power converting apparatus 100 is further reduced.

The configuration may more effectively transfer the rotation force than the configuration of FIG. 3 described above, and since the first gear 111 and the second gear 121 are directly connected with each other, the rotation force generated when the first ACDC motor generator 110 rotates at a high speed may be more easily transferred to the second ACDC motor generator 120.

As such, since the first ACDC motor generator 110 and the second ACDC motor generator 120 rotate by engaging with each other through the gears, when the gear ratio of the corresponding gear is controlled, the power supply ratio of the generated AC power or DC power may also be controlled.

For example, in the case where the first gear 111 of the first ACDC motor generator 110 connected with the AC power supply side is configured by a gear smaller than the second gear 121, the first ACDC motor generator 110 rapidly rotates, and as a result, higher DC power may be generated by more rapidly rotating the second ACDC motor generator 120. In the case where the first gear 111 of the first ACDC motor generator 110 is configured by a gear larger than the second gear 121, the first ACDC motor generator 110 slowly rotates, and as a result, lower DC power may be generated even in the second ACDC motor generator 120.

Further, on the contrary, in the case where the second gear 121 of the second ACDC motor generator 120 connected with the DC power supply side is configured by a gear smaller than the first gear 111, the second ACDC motor generator 120 rapidly rotates, and as a result, higher AC power may be generated by more rapidly rotating the first ACDC motor generator 110. In the case where the second gear 121 of the second ACDC motor generator 120 is configured by a gear larger than the first gear 111, the second ACDC motor generator 120 slowly rotates, and as a result, lower AC power may be generated even in the first ACDC motor generator 110.

Finally, referring to FIG. 5, the internal rotators of the first ACDC motor generator 110 and the second ACDC motor generator 120 face in the same direction, and the first gear 111 and the second gear 121 are formed at the ends of the internal rotators, respectively.

In addition, the first gear 111 and the second gear 121 do not directly engage with each other, but are connected with each other through a separate belt 140.

Here, the belt 140 may be understood as a meaning corresponding with a timing belt that connects a timing gear installed at a crank shaft of an engine in a vehicle engine and a timing gear installed at a cam shaft.

By such a configuration, the first gear 111 and the second gear 121 may rotate in the same direction, and correspond to a configuration having higher energy efficiency than the energy efficiency in FIGS. 3 and 4 above.

For this reason, in FIGS. 3 and 4, since the plurality of gears directly engage with each other, the energy efficiency may be reduced by some degree due to friction generated when protrusions of the first gear 111, the second gear 121, and the rotation shaft gear 131 contact each other. On the contrary, since the configuration of FIG. 5 does not have the friction, the energy efficiency may not be reduced.

In an embodiment, protrusions protruding at predetermined intervals may be formed on an inner surface of the belt 140, that is, a surface contacting the first gear 111 and the second gear 121.

Here, the protrusions protruding at the predetermined intervals may mean an uneven structure formed on the inner surface like the timing belt of the vehicle engine, and the protrusions may be formed to correspond to the generation intervals of the protrusions formed at the first gear 111 and the second gear 121. As a result, the belt 140 may engage with the first gear 111 and the second gear 121 without an interval, and further, the rotation force of the first ACDC motor generator 110 may be transferred to the second ACDC motor generator 120, or the rotation force of the second ACDC motor generator 120 may be transferred to the first ACDC motor generator 110 as it is, and the first ACDC motor generator 110 and the second ACDC motor generator 120 may be prevented from running idle.

As described above, the bidirectional power converting apparatus 100 according to the present invention may connect the first ACDC motor generator 110 and the second ACDC motor generator 120 by physical connection (the rotation shaft 130 or the belt 140) without a separate insulating element 11, and further, a circuit thereof may be simplified as compared with the existing converter 10 using the insulating element 11, and the entire size thereof may be reduced as compared with the existing converter 10 using the insulating element 11.

Further, the bidirectional power converting apparatus 100 according to the present invention supplies the generated AC power or the insulated DC power to the battery to charge the battery.

While the invention has been shown and described with respect to the specific embodiments, it will be apparent to those skilled in the art that the spirit of the present invention is not limited to the accompanying drawings and the described contents and various changes and modifications may be made without departing from the spirit of the invention. The modifications may belong to the claims of the invention without departing from the spirit of the invention.

## Claims

1. A bidirectional power converting apparatus connected so as to charge a battery, comprising:
a plurality of ACDC motor generators that receives an AC power supply to generate DC power or receives a DC power supply to generate AC power,
wherein the plurality of ACDC motor generators is connected with each other through a rotation shaft.

2. The bidirectional power converting apparatus of claim 1, wherein the plurality of ACDC motor generators is provided according to a power supply specification of the applied AC power supply or DC power supply.

3. The bidirectional power converting apparatus of claim 2, wherein the power supply specification corresponds to at least one of a voltage, an ampere, a frequency, and power consumption.

4. The bidirectional power converting apparatus of claim 1, wherein the plurality of ACDC motor generators provides rotation force for rotating the rotation shaft.

5. The bidirectional power converting apparatus of claim 1, wherein the plurality of ACDC motor generators is fastened with each other through the rotation shaft and at least one gear, respectively.

6. The bidirectional power converting apparatus of claim 5, wherein in each of the plurality of ACDC motor generators, a power supply ratio is controlled through a gear ratio of each of one or more gears.

7. The bidirectional power converting apparatus of claim 1, wherein the plurality of ACDC motor generators engages with each other to be fastened with each other through at least one gear, respectively.

8. The bidirectional power converting apparatus of claim 7, wherein in each of the plurality of ACDC motor generators, power supply ratios are controlled through gear.

9. The bidirectional power converting apparatus of claim 1, wherein the plurality of ACDC motor generators generates AC power or DC power insulated through each rotation force.

10. The bidirectional power converting apparatus of claim 1, wherein the plurality of ACDC motor generators is provided according to a power supply specification of each generated AC power or DC power.

11. The bidirectional power converting apparatus of claim 10, wherein the power supply specification corresponds to at least one of a voltage, an ampere, a frequency, and power consumption.

12. The bidirectional power converting apparatus of claim 1, wherein the plurality of ACDC motor generators is connected with each other through one or more belts and rotates so as to respond to each other.

13. The bidirectional power converting apparatus of claim 1, wherein the plurality of ACDC motor generators is insulated from each other.
